# EUROPÄISCHE PATENTANMELDUNG

(11) **EP 3 741 802 A1**
(43) Veröffentlichungstag der Anmeldung: **25.11.2020**
(21) Anmeldenummer: 19176355.6
(22) Anmeldetag: 24.05.2019
(51) Int. Cl.: C08L 7/00, B60C 1/00

(54) **KAUTSCHUKMISCHUNG UND REIFEN**

(71) Anmelder: Continental Reifen Deutschland GmbH, 30165 Hannover (DE)
(72) Erfinder: Sa, Catarina, 30165 Hannover (DE); Pavon Sierra, Viktoria, 30165 Hannover (DE); Müller, Norbert, 30165 Hannover (DE)
(74) Vertreter: Finger, Karsten

(57) **Zusammenfassung**

Die Erfindung betrifft eine schwefelvernetzbare Kautschukmischung, insbesondere für den Laufstreifen von Fahrzeugluftreifen, enthaltend 20 - 100 phr (Gewichtsteile, bezogen auf 100 Gewichtsteile der gesamten Kautschuke in der Mischung) zumindest eines hydrierten lösungspolymerisierten Styrol-Butadien-Copolymers, bis zu 80 phr zumindest eines weiteren Dienkautschuks und 40 - 350 phr zumindest eines Füllstoffes.
Die Erfindung betrifft ferner einen Fahrzeugluftreifen mit einem Laufstreifen, der zumindest zum Teil aus einer solchen, mit Schwefel vulkanisierten Kautschukmischung besteht.

Zur Verbesserung des Abriebverhaltens und des Cut-und-Chip-Verhaltens ohne Verschlechterung des Bremsverhaltens weist das hydrierte lösungspolymerisierte Styrol-Butadien-Copolymer einen Hydrierungsgrad von 80 bis 98 % auf.

## Beschreibung

Die Erfindung betrifft eine schwefelvernetzbare Kautschukmischung, insbesondere für den Laufstreifen von Fahrzeugluftreifen, enthaltend 20 - 100 phr (Gewichtsteile, bezogen auf 100 Gewichtsteile der gesamten Kautschuke in der Mischung) zumindest eines hydrierten lösungspolymerisierten Styrol-Butadien-Copolymers, bis zu 80 phr zumindest eines weiteren Dienkautschuks und 40 - 350 phr zumindest eines Füllstoffes.
Die Erfindung betrifft ferner einen Fahrzeugluftreifen mit einem Laufstreifen, der zumindest zum Teil aus einer solchen, mit Schwefel vulkanisierten Kautschukmischung besteht.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt, so ist eine Verbesserung des Abriebverhaltens üblicherweise mit einer Verschlechterung des Bremsverhaltens auf trockener Fahrbahn verbunden. An Laufstreifenmischungen für PKW- und Van-Reifen werden beispielsweise höchste Anforderungen hinsichtlich des Nass- und Trockenbremsens, des Abriebwiderstands, des Cut-und-Chip-Verhaltens, des Rollwiderstands, der Haltbarkeit und des Handlings gestellt.

Um Reifeneigenschaften wie Abrieb, Nassrutschverhalten und Rollwiderstand zu beeinflussen, ist es z. B. bekannt, lösungspolymerisierte Styrol-Butadien-Copolymere mit unterschiedlicher Mikrostruktur einzusetzen. Außerdem lassen sich Styrol-Butadien-Copolymere modifizieren, indem z. B. die Styrol- und Vinyl-Anteil, Endgruppenmodifizierungen, Kopplungen oder Hydrierungen vorgenommen werden. Die verschiedenen Copolymertypen haben unterschiedlichen Einfluss auf die Vulkanisat- und damit auch auf die Reifeneigenschaften.

In der EP 0 302 505 B1 werden rußhaltige Kautschukmischungen für Reifen mit gutem Nassgriff und niedrigem Rollwiderstand beschrieben, die teilweise hydrierte lösungspolymerisierte Styrol-Butadien-Copolymere enthalten.

Aus der EP 0 775 725 B1 ist es bekannt, Kautschukmischungen für Reifen mit gutem Nassgriff, guter Verarbeitbarkeit und geringem Rollwiderstand bereitzustellen, die partiell hydrierte Styrol-Butadien-Copolymere, Kieselsäure und Silan-Kupplungsagenzien enthalten. Die in der EP 0 775 725 B1 offenbarten Styrol-Butadien-Copolymere weisen bei Styrolgehalten von mehr als 37 Gew.-% nur einen Hydrierungsgrad von 25 % auf.

In der EP 2 092 013 B1 werden Kautschukmischungen für Fahrzeugluftreifen mit gutem Nassgriff, geringem Rollwiderstand und guten Wintereigenschaften offenbart, die 30 bis 80 phr zumindest eines teilweise hydrierten lösungspolymerisierten Styrol-Butadien-Copolymers mit einem Hydrierungsgrad von mehr als 30 % aufweist. Konkret werden Styrol-Butadien-Copolymere mit einem Hydrierungsgrad von 35 und 67 % beschrieben.

Ausgehend von diesem Stand der Technik liegt der Erfindung die Aufgabe zugrunde, Kautschukmischungen für die Laufstreifen von Fahrzeugluftreifen bereitzustellen, die beim Reifen zu einer Verbesserung des Abriebverhaltens und des Cut-und-Chip-Verhaltens führen, ohne dass es zu einer Verschlechterung des Bremsverhaltens, insbesondere des Trockenbremsens, kommt und die gleichzeitig ein hohe Sicherheit vor Anvulkanisation bei der Extrusion (Scorchsicherheit) aufweisen.

Gelöst wird diese Aufgabe erfindungsgemäß dadurch, dass das hydrierte lösungspolymerisierte Styrol-Butadien-Copolymer einen Hydrierungsgrad von 80 bis 98 % aufweist.

Unter Hydrierungsgrad eines Kautschukes ist dabei das Verhältnis der hydrierten Doppelbindungen zu den nicht hydrierten Doppelbindungen zu verstehen. Aromatische Doppelbindungen der Styrolbausteine werden dabei nicht berücksichtigt.

Überraschenderweise wurde gefunden, dass durch den Einsatz eines hydrierten lösungspolymerisierten Styrol-Butadien-Copolymers mit einem sehr hohen Hydrierungsgrad von 80 bis 98 % in Kieselsäuremischungen die Eigenschaften Abrieb und und Cut-und-Chip deutlich verbessern, ohne dass dabei das Trockenbremsen beeinträchtigt wird. Dies ist umso überraschender, da nur noch 10 bis 2 % der ursprünglichen Doppelbindungen am Polymerrückrad für die Vernetzung mit Schwefel zur Verfügung stehen. Die Mischungen zeigen außerdem eine geringe Vulkanisationsgeschwindigkeit zu Beginn der Vulkanisation, was zur Scorchsicherheit bei der Extrusion führt.

Die erfindungsgemäße Kautschukmischung bietet zusätzlich den Vorteil, dass sie durch den geringen Anteil an Doppelbindungen weniger anfällig gegen übliche Alterungsprozesse durch Sauerstoff, Wärme, Ozon und Licht. und Nassgriff und Rollwiderstand auf ein besseres Niveau gebracht werden können.

Die schwefelvernetzbare Kautschukmischung enthält 20 - 100 phr, vorzugsweise 30 bis 100 phr, zumindest eines teilweise hydrierten lösungspolymerisierten Styrol-Butadien-Copolymers mit einem Hydrierungsgrad von 80 bis 98 %, die nach dem Fachmann bekannten Polymerisations- und Hydrierungsverfahren hergestellt werden können. Es können auch mehrere hydrierte lösungspolymerisierte Styrol-Butadien-Copolymere im Verschnitt eingesetzt werden.

Ein besonders ausgewogenes Verhältnis von Nassgriff und Rollwiderstand lässt sich erzielen, wenn das hydrierte lösungspolymerisierte Styrol-Butadien-Copolymer einen Hydrierungsgrad von 90 bis 98 % aufweist. Bei diesen Hydrierungsgraden wird ein besonders guter Schutz vor Alterung erzielt.

Für besonders gute Vulkanisat- und Reifeneigenschaften hat es sich als vorteilhaft erwiesen, wenn das hydrierte lösungspolymerisierte Styrol-Butadien-Copolymer eine Styrol-Anteil von 5 bis 40 Gew.-% aufweist.

Die erfindungsgemäße Kautschukmischung enthält weiterhin bis zu 80 phr, vorzugsweise 70 phr, zumindest eines weiteren Dienkautschuks. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bei den Dienkautschuken kann es sich z. B. um natürliches Polyisopren und/oder synthetisches Polyisopren und/oder Polybutadien (Butadien-Kautschuk) und/oder Styrol-Butadien-Copolymer (Styrol-Butadien-Kautschuk) mit einem anderen Hydrierungsgrad als 80 bis 98 % und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk handeln. Die Kautschuke können als reine Kautschuke oder in ölverstreckter Form eingesetzt werden.

Bevorzugt ist der weitere Dienkautschuk jedoch ausgewählt aus der Gruppe, bestehend aus natürlichem Polyisopren, synthetischem Polyisopren, Polybutadien und weiteren Styrol-Butadien-Copolymeren. Diese Dienkautschuke lassen sich gut zu der Kautschukmischung verarbeiten und ergeben in den vulkanisierten Reifen gute Reifeneigenschaften.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisoprenen denkbar. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Bei dem Butadien-Kautschuk (BR, Polybutadien) kann es sich um alle dem Fachmann bekannten Typen mit einem Mw von 250000 bis 500000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt. Das eingesetzte Polybutadien kann mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem weiteren Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem Mw von 250000 bis 600000 g/mol (zweihundertfünfzigtausend bis sechshunderttausend Gramm pro Mol).

Das oder die eingesetzte(n) weiteren Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Die Kautschukmischung enthält 40 bis 350 phr zumindest eines Füllstoffes. Dabei kann es sich um Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

Zur Reduzierung des Rollwiderstandes hat es sich als vorteilhaft erwiesen, wenn die Kautschukmischung als Füllstoff Kieselsäure enthält.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m2/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Vorzugsweise enthalt die Kautschukmischung 50 bis 150 phr Kieselsäure, um eine gute Verarbeitbarkeit bei guten Reifeneigenschaften zu erzielen.

Zur Verbesserung der Verarbeitbarkeit und zur Anbindung der Kieselsäure an den Dienkautschuk in kieselsäurehaltigen Mischungen wird vorzugsweise zumindest ein Silan-Kupplungsagens in Mengen von 1 - 15 phf (Gewichtsteile, bezogen auf 100 Gewichtsteile Kieselsäure) in der Kautschukmischung eingesetzt.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT® in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

In der Kautschukmischung können Weichmacher und Harze in Mengen von 1 bis 300 phr, bevorzugt von 5 bis 150 phr, besonders bevorzugt von 15 bis 90 phr, enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
f) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50®, Rheinchemie GmbH, Zinkdichloryldithiophosphat (z. B. Rhenocure ZDT/S®, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung im Fahrzeugluftreifen herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung wird für die Herstellung von Fahrzeugluftreifen, wie PKW-, Van-, LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die dann einen Dienkautschuk, einen Füllstoff und das spezielle hydrierte SSBR enthält. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Die Erfindung soll nun anhand von Vergleichs- und Ausführungsbeispielen, die in der Tabelle 1 zusammengefasst sind, näher erläutert werden.
Die Vergleichsmischungen sind dabei mit V, die erfindungsgemäße Mischung ist mit E gekennzeichnet. Die Mischungen 3(V) bis 6(V) entsprechen den Mischungen 1 bis 4 der EP 2 092 013 B1.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Mit den Mischungen wurden die Vernetzungszeiten bei 10 % Umsatz (t₁₀ Anvulkanisationszeit) und 90 % Umsatz (t₉₀, Ausvulkanisationszeit) mittels rotorlosem Vulkameter (MDR = Moving Disc Rheometer) gemäß ASTM D5289 und ISO 6502 ermittelt.

Ferner wurden mit den Mischungen 1(V) und 2(E) Fahrzeugluftreifen der Dimension 225/35 ZR19 gebaut, deren Laufstreifen die in der Tabelle 1 angegeben Mischungen als Laufstreifencap aufwiesen, und die folgenden Eigenschaften ermittelt:
- Seitenführungssteifigkeit: Bestimmung auf Trommel mit 4100 N Last, Geschwindigkeit 40 km/h bei Raumtemperatur
- Trockenbremsen: ABS-Bremsen auf 100 km/h, trockener Asphalt
- Abrieb: Gewichtsverlust der jeweiligen Reifen nach 8800 km Straßenfahrt bei einer mittleren Temperatur von +15 °C
- Cut-und-Chip-Verhalten: ermittelt durch Schuttwegekonvoifahrt mit mehreren identischen Fahrzeugen nach 2000 km, Auszählung und Vergleich der entstandenen Risse und Profilausbrüche

Die ermittelten Werte wurden in Performance (Leistung) umgerechnet, wobei die Vergleichsmischung V1 bei jeder getesteten Eigenschaft auf 100 % Performance normiert wurde. Alle anderen Mischungsleistungen beziehen sich auf diese Vergleichsmischung V1. Hierbei bedeuten Werte < 100 % eine Verschlechterung der Eigenschaften, während Werte > 100 % eine Verbesserung darstellen.

**Tabelle 1**

| **Bestandteile** | **Einheit** | **1(V)** | **2(E)** | **3(V)** | **4(V)** | **5(V)** | **6(V)** |
|---|---|---|---|---|---|---|---|
| cis-Polybutadien | phr | - | - | 23 | 23 | 23 | 23 |
| S-SBR Typ A^{a} | phr | - | - | 77 | - | - | - |
| S-SBR Typ B^{b} | phr | - | - | - | 77 | - | - |
| S-SBR Typ C^{c} | phr | - | - | - | - | 77 | - |
| S-SBR Typ D^{d} | phr | - | - | - | - | - | 77 |
| S-SBR Typ E^{e} | phr | 100 | - | - | - | - | - |
| S-SBR Typ F^{f} | phr | - | 100 | - | - | - | - |
| Kieselsäure^{g} | phr | 95 | 95 | 95 | 95 | 95 | 95 |
| Weichmacher | phr | 31 | 33 | 35 | 35 | 35 | 35 |
| Silan-Kupplungsagens^{h} | phr | 9 | 9 | 8,1 | 8,1 | 8,1 | 8,1 |
| Alterungsschutzmittel | phr | 2 | 2 | 4 | 4 | 4 | 4 |
| Ozonschutzwachs | phr | 2 | 2 | 2 | 2 | 2 | 2 |
| Zinkoxid | phr | 2,5 | 2,5 | 2,5 | 2,5 | 2,5 | 2,5 |
| Stearinsäure | phr | 2,5 | 2,5 | 2,5 | 2,5 | 2,5 | 2,5 |
| Prozesshilfsmittel | phr | 4 | 4 | - | - | - | - |
| Beschleuniger | phr | 4,2 | 4,2 | 4 | 4 | 4 | 4 |
| Schwefel | phr | 2 | 2 | 2 | 2 | 2 | 2 |

| **Eigenschaften** | | | | | | | |
|---|---|---|---|---|---|---|---|
| t₁₀ | min | 3,98 | 4,48 | 4,38 | 0,67 | 1,83 | 0,78 |
| t₉₀ | min | 12,16 | 21,51 | 18,53 | 12,52 | 11,76 | 12,39 |
| Seitenführungssteifigkeit | % | 100 | 113 | - | - | - | - |
| Trockenbremsen | % | 100 | 100 | - | - | - | - |
| Abrieb | % | 100 | 148 | - | - | - | - |
| Cut-und-Chip-Verhalten | % | 100 | 150 | - | - | - | - |

| | | | | | | | |
|---|---|---|---|---|---|---|---|
| ^{a} NS 116 R, Nippon Zeon, Japan, Vinyl-Anteil: 67 Gew.-%, Styrol-Anteil: 22 Gew.-%, Hydrierungsgrad: 0 % ^{b} lösungspolymerisiertes Styrol-Butadien-Copolymer, Styrol-Anteil: 38 Gew.-%, Hydrierungsgrad: 0 % ^{c} teilweise hydriertes lösungspolymerisiertes Styrol-Butadien-Copolymer, Styrol-Anteil: 38 Gew.-%, Hydrierungsgrad: 35 % ^{d} teilweise hydriertes lösungspolymerisiertes Styrol-Butadien-Copolymer, Styrol-Anteil: 38 Gew.-%, Hydrierungsgrad: 67 % ^{e} lösungspolymerisiertes Styrol-Butadien-Copolymer, Styrol-Anteil: 21 Gew.-%, Hydrierungsgrad: 0 % ^{f} lösungspolymerisiertes Styrol-Butadien-Copolymer, Styrol-Anteil: 34 Gew.-%, Hydrierungsgrad: 95 %, JSR NT120, JSR Corporation ^{g} VN3, Degussa AG, Deutschland, Stickstoff-Oberfläche: 175 m²/g, CTAB-Oberfläche: 160 m²/g ^{h}TESPD, 3,3'-Bis(triethoxysilylpropyl)disulfid | | | | | | | |

Aus den Daten der Tabelle 1 wird ersichtlich, dass durch die Anwesenheit des hydrierten lösungspolymerisierten Styrol-Butadien-Copolymers mit einem Hydrierungsgrad von 80 bis 98 % im Vergleich zu einer Mischung mit nicht hydriertem Polymer (1(V)) eine deutliche Verbesserung der Seitenführungssteifigkeit und damit des Handlings erreicht werden kann. Noch deutlicher ist die Verbesserung der Eigenschaften Abrieb und Cut-und-Chip, was in einer deutlich verbesserten Haltbarkeit von Reifen resultiert. Im Vergleich zu Mischungen mit hydrierten lösungspolymerisierten Styrol-Butadien-Copolymeren mit einem geringeren Hydrierungsgrad als 80 % (s. 3(V) und 4(V)) zeigt sich für die erfindungsgemäße Mischung eine Anvulkanisationszeit t₁₀ im handhabbaren Bereich von ca. 4 min, die eine Anvulkanisation (Scorch) während der Extrusion verhindert.

## Patentansprüche

1. Schwefelvernetzbare Kautschukmischung, insbesondere für den Laufstreifen von Fahrzeugluftreifen, enthaltend
- 20 - 100 phr (Gewichtsteile, bezogen auf 100 Gewichtsteile der gesamten Kautschuke in der Mischung) zumindest eines hydrierten lösungspolymerisierten Styrol-Butadien-Copolymers,
- bis zu 80 phr zumindest eines weiteren Dienkautschuks und
- 40 - 350 phr zumindest eines Füllstoffes,
**dadurch gekennzeichnet, dass** das hydrierte lösungspolymerisierte Styrol-Butadien-Copolymer einen Hydrierungsgrad von 80 bis 98 % aufweist.

2. Kautschukmischung nach Anspruch 1, **dadurch gekennzeichnet, dass** das hydrierte lösungspolymerisierte Styrol-Butadien-Copolymer einen Hydrierungsgrad von 90 bis 98 % aufweist.

3. Kautschukmischung nach Anspruch 1 oder 2, **dadurch gekennzeichnet, dass** das hydrierte lösungspolymerisierte Styrol-Butadien-Copolymer einen Styrol-Anteil von 5 bis 40 Gew.-% aufweist.

4. Kautschukmischung nach zumindest einem der vorhergehenden Ansprüche, **dadurch gekennzeichnet, dass** der weitere Dienkautschuk ausgewählt ist aus der Gruppe, bestehend aus natürlichem Polyisopren, synthetischem Polyisopren, Polybutadien und weiteren Styrol-Butadien-Copolymeren.

5. Kautschukmischung nach zumindest einem der vorhergehenden Ansprüche, **dadurch gekennzeichnet, dass** sie als Füllstoff Kieselsäure enthält.

6. Kautschukmischung nach Anspruch 5, **dadurch gekennzeichnet, dass** sie 50 bis 150 phr Kieselsäure enthält.

7. Kautschukmischung nach Anspruch 5 oder 6, **dadurch gekennzeichnet, dass** sie 1 - 15 phf (Gewichtsteile, bezogen auf 100 Gewichtsteile Kieselsäure) zumindest eines Silan-Kupplungsagenzes enthält.

8. Fahrzeugluftreifen mit einem Laufstreifen, dessen zumindest mit der Fahrbahn in Berührung kommender Teil aus einer mit Schwefel vulkanisierten Kautschukmischung nach einem der Ansprüche 1 bis 7 besteht.
